# EUROPEAN PATENT APPLICATION

(11) **EP 4 394 350 A1**
(43) Date of publication of application: **03.07.2024**
(21) Application number: 22217442.7
(22) Date of filing: 31.12.2022
(51) Int. Cl.: G01N 15/14, G01N 15/10, B01L 3/00

(54) **APPARATUS AND METHOD FOR SEPARATING PARTICLES**

(71) Applicant: Kromat Kft., 1112 Budapest (HU); Márk, László, 7624 Pécs (HU)
(72) Inventor: MARK, Laszlo, 7624 Pécs (HU)
(74) Representative: Danubia Patent & Law Office LLC

(57) **Abstract**

The invention relates to the field of analysis of membrane-bound compartments or analytes therein.

The present invention relates to an apparatus for separating or sorting hydrodynamically focused particles contained in a liquid said apparatus comprising
- a channel with wall, for conveying a liquid comprising hydrodynamically focused particles;
- gas inlet opening for introducing inert gas bubbles into the flow channel to separate groups of hydrodynamically focused particles of defined or pre-determined particle number;
- means for regulation of the introduction of inert gas into the flow channel; and
- preferably means for counting the particles

The present invention further relates to a method for sorting the hydrodynamically focused particles in the flow channel using the apparatus of the invention.

## Description

### Field of the invention

The present invention relates to the field of analysis of particles, preferably membrane-bound compartments or analytes therein. Specifically, the present invention relates to an apparatus and a method for separating or sorting hydrodynamically focused particles contained in a liquid within a channel.

### Background of the invention

Flow analysis methods are suitable for fast analysis of hydrodynamically focused particles or cell populations, wherein particles or cells having different features can be analyzed or separated. Particles are often referred to herein as cells since the method is mostly applied to them. However, it is clear for a person skilled in the art that adoption of the methods based on hydrodynamic focusing effect enables analysis of particles having different microscopic size range. For convenience we refer herein to particles or methods as "cell" or "cytometry" although it is noted that the terms implicitly include other particles to be analyzed or methods based on hydrodynamic focusing, respectively, if it is technically applicable to the particular environment.

Flow cytometry method based on hydrodynamical focusing and multiparametric assays (generally 4 to 6 parameter) of cells has been designed mostly for examination of cells. Using fluorescent signaling and laser scanning the hydrodynamically focused cells can be analyzed individually. The method is suitable for optical measurement of certain parameters or plain detection of certain feature. Even today it is considered to be a difficult task to perform fast and continuous analysis of a single cell or a population of cells of accurately determined cell number utilizing a complex analyzer.

The obstacle of performing the task is that the cells proceed in the very same liquid therefore an individual, cell by cell analysis of them is difficult to achieve, especially if to a complex analysis cells need to be digested or their membrane or cell wall ought to be destructed. It must be well defined during the analysis that which cell or population of cells is considered as a sample, or analyte, to be analyzed. However, the analytes exposed to digestion or destruction are tend to migrate and mix with each other, thus the advantages provided by the flow cytometer, which lies in separation or identification of the cells or their population , are lost.

Techniques on detection and data acquisition are available today for analyzing complex samples containing numerous components that provide a potentially large amount of information. In many of said cases the reproducibility and accurate definability of the sample play critical role and the reliability of the analysis depends on the quality and reproducibility of the sample preparation.

Said complex analysing techniques include mass spectrometry which has been able to perform fast analysis of complex systems by now.

Fluorescent signaling has been applied to solve the problem related to differentiation of the cells so far which does alter the sample to be analyzed. Several fluorescent dyes are known but their spectral interferences limit routine experimentation to the examination of 6 to 10 parameters.

Bandura D.R. et al. in US application 2009 134326, further, Tanner et al. in article "Flow cytometer with mass spectrometer detection for massively multiplexed single-cell biomarker assay" [Scott D. Tanner, Dmitry R. Bandura, Olga Ornatsky, Vladimir I. Baranov, Mark Nitz, and M. A. Winnik, Pure Appl. Chem., Vol. 80, No. 12, pp. 2627-2641, 2008] describe a flow cytometer comprising means for introducing the cells or particles sequentially or individually, means to vaporize, atomize and excite or ionize the particles, and spectrometer to analyze qualitatively or quantitatively the vaporized, atomized and excited or ionized particles. Applicants' objective is to develop a flow cytometry method utilizing the process and apparatus of the invention wherein fluorescence activation of the cells (FACS method) is not required.

Still, the essence of the method is labeling; i.e. labeling of some of the components in the cells including proteins, peptides and biomolecules with antibody-metal ion complexes. Then, the labeled biomolecules can be determined indirectly by measuring the metal marker using inductively coupled plasma or graphite furnace atomic absorption spectroscopy. The atomic absorption and the generated ions are detected by spectrophotometry and mass spectrometry, respectively. By its very nature, during the ionization processes described by the documents the molecules are atomized and completely decomposed, thus, it renders them completely inadequate for *in situ* label-free analysis of complex analytes such as biomolecules. Due to the special labeling technique only molecules of known structure and approximately known physiological concentration can be determined.

Janes and Rommel [Matthew R Janes & Christian Rommel: Next-generation flow cytometry, Nature Biotechnology pp 602-604, Volume 29 Number 7 JULY 2011] disclose an apparatus similar to the one described above wherein antibodies tagged with stable isotopes of transition metals are applied before mass spectrometry.

We aimed to define the analytes accurately utilizing a label-free technique differs from the above, which provides controllable separation of cells. WO02/23163 application (Stephen Quake and Todd Thorsen) describes similar solution i.e. water immiscible liquid was used, such as oil, to prevent mixing of different analytes in the aqueous medium and the water droplets containing the analytes were introduced into the water immiscible liquid stream. The drawback of the method is the presence of the oil itself in the measuring system, since small portion could dissolve in the aqueous phase or enter into the system in some other way. It may cause disturbance since the oil is contaminant in several measurement technique. In addition, amphipathic compounds may be enriched at the oil/water interface and complex interactions may occur which interfere with the analysis.

We have found that in flow analysis, preferably in flow cytometry it is useful to layer inert gas bubbles (nitrogen, noble gases such as argon and helium, and optionally air, etc.) between cells focused hydrodynamically in such a manner that each cells or groups of cells are separated by one bubble. As a result, individual cells are surrounded by a small volume of liquid and flow separately. We have unexpectedly found also that this solution not only solves the problem of sharp and contaminant-free separation of cells or population of cells but the gas introduction, primarily through the regulation of pressure and volume of the gas, provides wide range of opportunities to synchronize the hydrodynamical focusing, the flow analysis, the sample preparation and detection.

### Brief description of the invention

An aspect of the invention is providing an apparatus for separating hydrodynamically focused particles contained by a liquid in accordance with claim 1. Preferred further embodiments of the apparatus are set forth in claims 2 to 11.

In particular, said channel preferably comprises
- at least one inlet opening, wherein the liquid stream comprising and/or carrying the particles enters the channel, and
- at least one outlet opening wherein the liquid stream comprising and/or carrying the analytes, optionally the sample leaves the channel.

Preferably the internal diameter or internal dimension of the channel enables or induces or facilitates laminar flow in the channel and hydrodynamical focusing of the particles carried by the liquid.

Preferably the internal diameter of the channel scales proportionally with the diameters of the particles in a manner that the internal diameter of the channel enables hydrodynamic focusing of the particles.
a) Preferably the internal dimension of the channel measured in at least one direction is at least 2 µm or at least 10 µm or at least 50 µm or at least 100 µm or at least 200 µm.
b) Preferably the internal dimension of the channel measured in at least one direction is at most 1000 µm or preferably at most 500 µm or at most 200 µm or at most 100 µm or at most 50 µm or at most 20 µm.

Preferably the internal diameter of the channel is constant at least on a section of the channel, preferably at least on the section between the gas inlet opening and the means for particle processing or the gas outlet opening.

Preferably the walls of the channel are pressure-tight.

Preferably the walls of the channel are made of inert material or coated with inert material.

Preferably, in the apparatus of the invention, the means for regulation of the inert gas introduction comprises
- sensor for detection of each particles carried by the liquid stream, and optionally
- control unit connected to the sensor for the regulation of inert gas introduction between different particle group (particle series or sets),
wherein the gas inlet opening is located downwards from the sensor in the channel.

Preferably the regulation of inert gas introduction comprises one or more selected from
- regulation of the introduced inert gas amount between two optional particles in case of any or each bubble wherein the two particles belong to different particle groups or series,
- counting of the particles of every particle groups or series,
- scheduled introduction of inert gas between two individual particles or two particles of two different particle groups,
- thereby regulation of the number of particles of each particle group.

Preferably, in the apparatus of the invention each particle group comprises a single particle.

The apparatus of the invention preferably comprises
- outlet opening for removing the excess particles,
- outlet opening for removing the unnecessary parts (debris) of the digested (e.g. lysed or destructed) cells if the cells are digested or lysed or destructed,
- outlet opening for removing the excess gas and/or
- outlet opening for removing the excess liquid.

In a preferred embodiment the outlet opening for removing the excess particles is arranged substantially opposite to the gas inlet opening. Preferably the angle of the outlet axis is set to enable the removal of particles, preferably, it is located (angled) slightly downwards in the flow direction from the inlet opening.

In the apparatus according to the present invention, the particles are preferably selected from the group consisting of cells, cellular compartments, membrane vesicles, micelles, viruses and complexes of biomolecules. The particles are preferably viruses or cells, more preferably cells.

Preferably the apparatus of the invention further comprise means for releasing analytes from particles.

In one embodiment the means for releasing analytes is means for releasing several analytes. Preferably, the means for releasing one or more analytes from particles is means for digesting or lysing or destructing the particles.

In a preferred embodiment the means for digesting particles is lysis device provided that the particles can be lysed. Preferably, lysable particles are membrane or wall bound compartments having internal space or cavity bounded by the membrane or wall and the term "lysis" means the destruction or breaking of the membrane and/or the wall and therefore the release of the content of the internal space into the environment or medium or liquid. Preferably the lysis device is selected from the group consisting of femtosecond laser, ultrasonic device, chemical lysis device, temperature-based lysis device, electrophoretic lysis device and osmotic lysis device.

Preferably the inert gas is removed completely or partially through the outlet opening for removing the excess gas. The outlet opening can be controlled via a control unit. Preferably the outlet opening control is operably linked to the control of inert gas inlet opening.

More preferably the flow rate of the liquid and thus the velocity of the particles contained by the liquid, the flow rate of the inert gas introduction and the inert gas removal are operably linked together and they are preferably synchronized.

In a preferred embodiment the inlet opening of the channel is connected to the device hydrodynamically focusing the particles and the liquid enters the channel through the inlet opening wherein the device hydrodynamically focusing the particles is preferably a flow cytometer or cell sorter.

Preferably the outlet opening of the channel is connected to the analyzer or testing device. Preferably the analyzer comprises a detection unit. More preferably the detection unit is selected from the group consisting of mass spectrometer, nucleic matrix, protein matrix, PCR device, etc.

Another aspect of the invention is a method for separating hydrodynamically focused particles in a channel in accordance with claim 12. Preferably the hydrodynamically focused particles may optionally be sorted as well. Furthermore, the hydrodynamically focused particles may also be detected with a sensor when passing in front of the sensor, and a signal obtained from the sensor may be processed for further use in controlling the number of particles in a single set of particles in groups of particles.

Preferred further variants of the method are defined in claims 13 to 18.

In particular, preferably the amount of the introduced inert gas is controlled by a control unit.

Preferably each group of particles separated by inert gas (gas bubbles) contains a single particle.

A preferred variant of the method according to the invention comprises one or more selected from
- removing the excess particles from the liquid stream optionally through an outlet opening,
- removing the unnecessary parts (debris) of the digested (e.g. lysed or destructed) cells if the cells are digested or lysed or destructed optionally through an outlet opening,
- removing the excess gas optionally through an outlet opening and/or
- removing the excess liquid optionally through an outlet opening.

Preferably in the method of the invention the particles are selected from the group as disclosed at the apparatus. More preferably the particles can be lysed, more preferably the lysable particles are membrane and/or wall bound compartments having internal space or cavity bounded by membrane and/or wall and the particles are lysed. Preferably the particles are lysed using a method selected from femtosecond laser, ultrasonic lysis, chemical lysis, temperature-based lysis, electrophoretic lysis and osmotic lysis. Most preferably the particles are cells.

Preferably analytes are released from particles preferably by destructing the particles. More preferably more than one analytes are released and optionally measured.

More preferably the destructed particles are measured by an analyzer after leaving the device through the outlet opening.

Preferably, the disclosure related to the apparatus is applied mutatis mutandis to the method of the invention.

### Definitions

The term "channel" ("flow channel") is understood as a device that enables the liquid to flow in a given direction, said channel
- having internal space filled with liquid during operation of the channel and solid walls bounding said internal space, and
- also having at least an inlet opening and at least an outlet opening, wherein the size of the internal space or the internal dimension of the channel measured in the flow direction, preferably the distance from the inlet opening to the outlet opening is substantially larger, (preferably ten times larger) than the at least one internal dimension bounded by the walls of the channel, which is measured perpendicularly to the flow direction.

The term "wall of the channel" is a solid element serving to bound the internal space and determine the geometrical shape of the internal space.

The term "coating of the wall of the channel" is a layer formed on the liquid-contacting surface of the wall of the channel, wherein said coating is part of the wall of the channel.

The term "inert material" is intended to mean a material being resistant to chemical substances.

A point located "downwards" from a certain point is determined by the flow direction and means that the liquid moves from the certain point towards the lower point.

A point located "upwards" from a certain point is determined by the flow direction and means that the liquid moves from a higher point towards the certain point.

The term "sample" is intended to mean an artificially separated part of the material world wherein one or more features of the material of the sample can be determined by analysis and subsequent evaluation.

The term "analyte" is intended to mean an entity of the sample which is desired to be determined by the analysis.

The term "matrix" is intended to mean any entity of sample not determined as analyte.

The term "aliquot" is intended to mean a portion of the sample on which the analysis is actually performed. If the entire sample is used and the sample amount can be defined and isolated during the sampling the aliquot and the sample is identical. In another embodiment, the aliquot is isolated from the sample.

The term "hydrodynamic focusing" means a fluidic process that is responsible for focusing a liquid stream carrying particles preferably cells, by a focusing (sheath) stream (fluid) in a channel, said process being accomplished by a pressure differential between the focusing stream and the liquid stream (focused stream), thereby ensuring that the particles move or pass through or in front of a counter, preferably a laser beam, one at a time, preferably along a path.

The term "hydrodynamically focused particle" means a particle which is part of a set of a particles which have been subjected to hydrodynamic focusing and thereby the particle together with the set of particles move in a channel in a row, i.e. pass through or before a given segment or part of the channel one at a time, preferably along a path. Thus optionally the particle in a liquid stream is hydrodynamically focused even without a focusing stream being present.

A "controlled number of particles" means a number of hydrodynamically focused particles detected with a sensor passing in front of the sensor, and defined using or preferably processing, the signal from the sensor. The number can be a pre-determined number or may be defined by a property of the particles. The number can be the same number for each sets or groups of particles. For example the number can be defined based on the sensitivity of the analysis as described herein. The number also can vary by sets or groups of particles. In particular, if the number is defined by a property of the particles it can vary by sets or groups of particles

### Brief description of figures

Fig 1a shows the principle of the hydrodynamic focusing, wherein focusing stream of higher pressure is applied due to the larger particle.
Fig 1b shows the principle of the hydrodynamical focusing effect, wherein focusing stream of lower pressure is applied due to the smaller particle.
Fig 2a depicts the top view of schematic representation of the hydrodynamical focusing with rectangle cross section
Fig 2b depicts the front view of schematic representation of the hydrodynamical focusing with rectangle cross section illustrating the gas introduction
Fig 3 shows asymmetric hydrodynamical focusing and flow separation of hydrodynamically focused stream and gas introduction
Fig 4 illustrates the operation of the interface connected to flow cytometer according to the invention
Fig 5 shows the schematic view of FC-MS
Fig 6 illustrates the removal of cell debris through a frit using transverse flow

### Detailed description of the invention

The invention relates to a device capable of separating particles hydrodynamically focused in a liquid in a manner that gas, in fact, a form of gas bubbles is layered between particles in a way that each particle or each particle group and the surrounding liquid are separated from each other by a gas bubble. Feasibly, the liquid is of a relatively small volume. In case gas bubbles are layered between particle groups, the size of particle groups is defined or regulated, preferably the number of particles in a group is defined or regulated. Preferably, the device comprises or is connected to an instrument capable of counting particles.

The device contains a channel with wall for conveying particles which are hydrodynamically focused in the liquid flow, an inlet opening for the introduction of inert gas bubbles between hydrodynamically focused particles having a regulated number of groups (preferably: series or sets) into the channel in a regulated way, since the amount of gas introduced must be regulated. According to a preferred variation, the amount of gas introduced into the device can be modified, which enables the user to adjust it in a given experiment. Consequently, the device preferably comprises an instrument for the regulation of inert gas introduction into the channel.

Thus, when the device is under normal operating conditions, the liquid flowing laminarly in its channel contains hydrodynamically focused particles and gas bubbles separating the particles or particle groups with a specific number of members in them and travelling at a rate equal with that of the liquid.

Generally, the channel has at least one inlet opening where the liquid flow enters the channel and at least one outlet opening where the liquid flow and the particles or the sample including the analyte produced as a result of processing leave the channel or pass over to the next instrument. In case, upon exit, the gas bubbles or a part of them are still present in the liquid flow, they will leave the channel together with the liquid flow. The location of the outlet opening in the channel is determined by the given embodiment and the structure of the instrument. Generally, if a subsequent instrument with a given function can be fitted to the channel, then removed from and reassembled to it, the liquid flow passes over to the next instrument through the outlet opening of the channel. Provided the liquid flow stream having a specific linear flow rate or volume flow rate, which exits from the previous instrument, corresponds to the function of the aforementioned subsequent instrument, it becomes possible for the two successive instruments to be directly connected. If necessary, a device capable of modulating the liquid flow can be inserted between the two instruments.

The modulating device may act as a modifier of the rate or volume rate of the liquid flow.

If appropriately designed, the modulator is also capable of separating the sample (sampling) from the liquid flow and it transfers only samples separated in this way to the device which is necessary for the analysis and used for the measurement procedure.

An example for modulating instruments is represented by a two-stage switching valve of 6 or 10 ports, which is equipped with loops with internal volume suitable for the function. The valve takes samples batch-wise between the two units, while the flow is adjusted to a higher level in the second unit compared to that in the first unit. In this case the outlet opening of the channel is connected to one of the ports of the switching valve.

As further example for modulation is the modification of the capillary diameter, by which flow rate can also be adjusted.

Flow can be set also by varying the rate of the liquid input, which is an alternative way of implementing modulation.

The above-mentioned function, in many cases, can be configured on the channel when the device providing such function is not the subsequent device but a part of the channel, which cannot be removed in such a way that it can be re-fitted and in this case the outlet opening of the channel is the same as the outlet opening of the device with the given function, which constitutes an integral part of the channel.

A device capable of sampling the flowing liquid is also considered to be a modulation device.

Where the investigation is not carried out with an instrument operably linked or linked "on-line" with the device of the invention, one or more samples are collected with a sample collector from the flowing liquid and in this manner the samples may as well be stored (off-line examination). Feasibly, the outlet opening is formed in a way that it is capable of introducing samples into a vessel constituting a part of the sample collector. Such sample collector may be, e.g., a microfraction collector. In this case it may be preferable for the sample drawing containers but not the outlet opening itself to be moved. Sample collecting vessels can be placed, e.g., on a tray, e.g. microtiter tray, which can be of a 96-well or a 384-well format. According to a preferred embodiment, the tray is shifted relative to the outlet opening and as a result, the sample gets into the proper wells through the outlet opening. According to a preferred embodiment, gas bubbles are not removed from the liquid flow and consequently, samples are constituted by the drops between gas bubbles. Preferably, the movement of the tray or that of fraction collector is controlled through the sequence of a sample being followed by a gas bubble. By the application of the same technique, the sample can be dropped onto the appropriate points of a micromatrix.

By using such method, the device can almost arbitrarily be adjusted to different known test (assay) formats, e.g. immunological tests, micromatrix tests, tests based of polymerase chain reaction, etc. The method can also be adjusted to high throughput procedures.

Where the sample should not be exposed to environmental atmosphere the fractions can be collected under an inert protecting gas. According to a preferred embodiment, the outlet opening ends in a needle or can be equipped with a needle, the container of the sample drawer is sealed with a septum through which the needle goes through, thus the sample can be transferred into the sample drawer container. In other aspects, the method is carried out as has been described above. Optionally, the complete tray or the micromatrix is sealed with a septum.

By using any of the methods described above or by any other methods, the liquid sample between two gas bubbles can be divided into several parts, e.g. several aliquots can be drawn from it. This may be preferred if the analyte in the liquid sample has a uniform distribution or it may be necessary if the analysable aliquot is of a limited volume. However, if the analyte distribution is not uniform, it would be more preferred to analyze the complete sample between two gas bubbles, and to regulate the introduction of gas bubbles in a way that the amounts of liquid drops present between two bubbles should be suitable for the subsequent analysis or sample drawing.

Persons skilled in the art are clearly aware of other alternative solutions.

### Entry of particles into the instrument, hydrodynamic focusing

During hydrodynamic focusing at least one diameter of a given laminar liquid flow can be narrowed and the liquid flow stream can be converted into a liquid flow of a relatively smaller diameter.

According to an embodiment, the laminarly flowing liquid is bordered by side streams 2 in such a way that their flow rates differ from each other. The focusing liquid flow may surround the liquid flow to be focused or the liquid flow to be focused is introduced between two focusing liquid flow streams at a rate which is different from that of the two flow streams. In this case, provided the arrangement is symmetric and the rates of the two focusing liquid flows are equal, the focused liquid flow is located in the symmetry plane of the liquid. In case the arrangement is asymmetric or the flow rates of the two focusing liquid flow streams are different, the focused liquid flow shifts from the symmetry plane and becomes asymmetrically arranged.

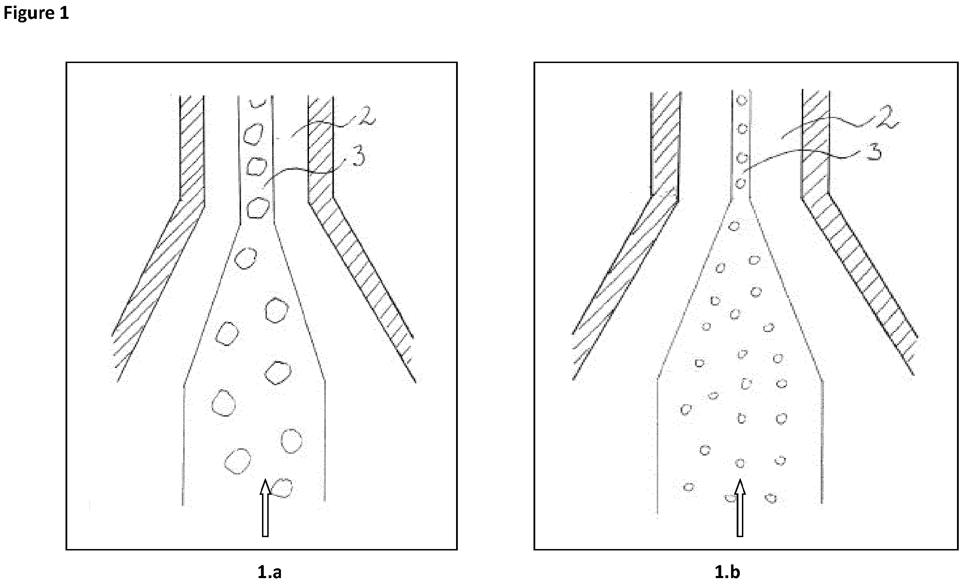

The flow rate is determined by, in addition to geometry, the pressure acting on focusing liquid flow 2 and on focused liquid flow 3. Provided, there is a pressure difference between the laminar liquid flow streams, they will not become mixed [Marek Dziubinski (2012). Hydrodynamic Focusing in Microfluidic Devices, Advances in Microfluidics, Dr. Ryan Kelly (Ed.), ISBN: 978-953-51-0106-2, InTech, Available from: http://www.intechopen.com/books/advances-inmicrofluidics/hydrodynamic-focusing-in-microfluidic-devices]. In case the pressure in the liquid flow to be focused is increased, the flow rate and the thickness (diameter) of focused liquid flow 3 will increase, consequently, the degree of focusing will decrease (see Figure 1). This is one of the possibilities for the thickness of the focused liquid flow to be adjusted to the particle size and for the flow rate to be adjusted to the time requirement of measurement (Figure 1).

Hydrodynamical focusing is suitable for sorting the particles suspended in the focused liquid flow, which enables particles to pass through a given interrogation point one after the other, thus they can be examined individually. This principle is utilized by flow studies, including, e.g., flow cytometry.

In the embodiment of the invention it s essential that hydrodynamically focused particles are used. A hydrodynamical focusing cell or a device comprising such cell can be integrated into the instrument of the invention. Thus, e.g., the instrument of the invention may be configured as a microfluidic channel on an integrated microfluidic chip.

According to another embodiment, the instrument of the invention can be reversibly connected to a hydrodynamical focusing cell. According to a preferred embodiment, the instrument of the invention is connected to a flow analyzing device

In the instrument of the invention it should be ensured that the inert gas is directly introduced into the focused liquid flow.

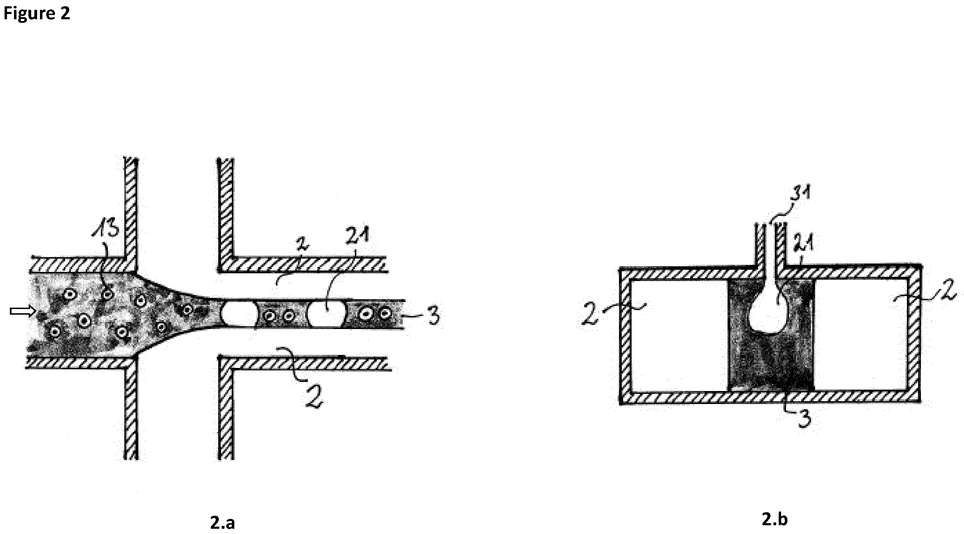

This can be ensured in a way that with regard to the focused liquid, the laminar liquid flow stream is bordered by the focusing liquid flow stream while creating liquid-liquid border regions opposite to each other, thus, the focused liquid flow, edged with the channel wall, also has two fluid-solid border regions which are basically perpendicular to the liquid-liquid border regions. In this case the gas inlet opening can be constructed in the channel wall through the liquid-solid boundary and consequently the inert gas can be introduced directly into the focused liquid through gas inlet opening 31 wherein it produces gas bubbles 21. According to this embodiment, the cross-section of the channel is designed in a way that its two opposite walls are essentially parallel, preferably, the cross-section is an oblong square or has a rectangular shape (see illustration e.g. Figure 2).

The scale of a focused liquid flow can be determined also by double focusing, in this manner, first focusing is performed by two focusing liquid flows from a defined direction then by two further focusing liquid flows from a direction perpendicular to them.

According to a further embodiment, asymmetric focusing is used with liquid flows having different flow rates, consequently, from one direction the focused liquid flow may come very close to the channel wall through, which allows for gas inlet opening 31 to be constructed.

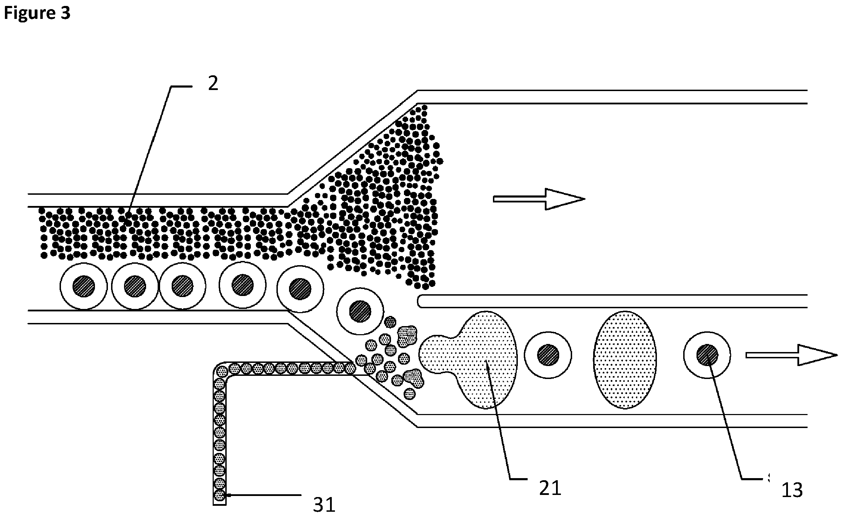

According to a further embodiment, the focused liquid flow is separated from the focusing liquid flow. An example of this technique is shown in Figure 3. In this case the channel wall is constructed in a way that its channel inlet opening is positioned in the way of the focused liquid flow. The gas inlet opening can now be built in the channel wall.

### Device parameters

Preferably the internal diameter of the channel scales proportionally with the diameters of the particles such that the internal diameter of the channel enables hydrodynamical focusing of the particles or maintaining the hydrodynamically focused state. This involves that the particles flows in the hydrodynamically focused stream and besides, in certain embodiments the focusing flow moves also in the channel. In other embodiments the hydrodynamically focused stream is separated from the focusing flow at a point. Such solution is shown on Figure 3. The correspondence between particle size and channel diameter is a matter of scaling in the specific task to be performed and it can be carried out by a skilled person.
a) Preferably the internal dimension of the channel measured in at least one direction is at least 2 µm or at least 5 µm or at least 10 µm or at least 30 µm or at least 50 µm or at least 100 µm or at least 200 µm.
b) Preferably the internal dimension of the channel measured in at least one direction is at most 1000 µm or preferably at most 500 µm or at most 300 µm or at most 250 µm or at most 200 µm or at most 150 µm or at most 100 µm or at most 50 µm or at most 30 µm or at most 20 µm.

Preferably the internal diameter of the channel measured in one direction is from 2 µm to 1000 µm, more preferably from 5 µm to 500 µm or from 10 µm to 300 µm or from 20 µm to 200 µm or from 200 µm to 2000 µm or from 2 µm to 20 µm or from 5 µm to 50 µm or from 10 µm to 100 µm or from 30 µm to 300 µm or from 100 µm to 500 µm.

The one or more internal dimension of the channel can be constant or can vary over the whole length of the channel. Preferably the internal diameter of the channel is constant at least on a section of the channel, preferably at least on the section between the gas inlet opening and the means for particle processing or the gas outlet opening.

The internal dimension of the channel measured in at least one direction is preferably 300 µm or at most 250 µm or at most 200 µm or at most 150 µm or at most 100 µm or at most 50 µm or at most 30 µm or at most 20 µm or from 10 µm to 300 µm or from 20 µm to 200 µm or from 2 µm to 20 µm or from 5 µm to 50 µm or from 10 µm to 100 µm or from 30 µm to 300 µm on that section where the particles are focused hydrodynamically.

The internal dimensions defined according to the point a) and b) above could relate to the same at least one direction or to different directions as well, optionally could relate simultaneously to the same direction and different ones. Provided that it relates to different directions, preferably any combination of a) and b) is possible, and a) and b) determine the lower and upper limits of the internal dimensions of the channel measured in different directions. Provided that internal dimensions according to a) and b) relate to the same directions, the lower limit of dimension a) is obviously smaller than the upper limit of direction b).

According to a preferred embodiment at least two opposite sides of the channel are formed by planes shaped and are parallel. Preferably, the cross section of the channel is rectangle, optionally is a square.

According to a preferred embodiment the cross section of the channel is elliptical. Preferably, the a) and b) values defined above relate to the minor and/or major axis of the ellipse.

Highly preferably, the cross section of the channel is circular and the a) and b) values defined above relate to the diameter of the circle.

Preferably the walls of the channel are pressure-tight.

Preferably the walls of the channel are made of inert material or coated with inert material.

Preferably, the wall of the channel is selected from the group consisting of
- metal e.g. stainless steel or aluminum or any alloy comprising or partially consisting of stainless steel or aluminum
- fused silica
- plastic e.g. polymers of the class of polyaryletherketones comprising aryl e.g. phenyl, preferably in position 1,4. Such polyaryletherketones are PEEK (polyetheretherketone), PEK (polyetherketone), PEKK (poly-etherketoneketone), PEEEK (polyether etherether ketone), PEEKK (polyetheretherketoneketone), PEKEKK (polyetherketoneetherketoneketone) or combinations thereof e.g. the channel is made of metal, the inner coating of which is silica or plastic.

Preferably, the channel can tolerate pressure of at least 2 bar, 5 bar, 10 bar, 20 bar, 50 bar, 200 bar or 400 bar, preferably 600 bar, more preferably 1000 bar or 1200 bar or 1300 bar or 1500 bar or 1800 bar or 2000 bar.

In a preferred embodiment higher pressure could be tolerated by the section of the channel between the gas inlet opening and the outlet opening or analytical unit 61 than the pressure tolerated by the channel section preceding the gas inlet opening (upwards) or subsequent to the outlet opening or analytical unit 61 (downwards). In a preferred embodiment the pressure in this section is adapted to the pressure range of the uHPLC devices on the market, preferably at least 1200 bar or 1300 bar or 1500 bar or 1800 bar or 2000 bar.

In a preferred embodiment the sample preparation unit or the analytical unit comprises liquid chromatography unit such as HPLC, the channel wall of which can tolerate pressure of at least 1200 bar or 1300 bar or 1500 bar or 1800 bar or 2000 bar.

Regarding other aspects, the pressure tolerance of the channel wall is adjusted to the specific application.

### Description of Apparatus Operation

The apparatus of the invention contains a channel with wall capable of conveying hydrodynamically focused particles and a gas inlet opening as well as means for controlling the introduction of inert gas into the channel and preferably means for counting particles (particle counter).

The particle counter comprises a detector system capable of detecting particles passing through the front of the detector system.

Preferably, the detector system comprises a light source, e.g. a laser source and a sensor. At this section the channel wall is transmissible for light, thus whenever a particle passes through the front of the detector system, a signal is generated in the sensor. The sensor can detect both the reflected and the transmitted light.

Preferably, the sensor is a laser scanning sensor and the refraction or transmission of the laser beam is measured, or
the sensor is a light sensitive sensor, e.g. a sensor that detects visible light (VIS), ultraviolet light (UV) or near infrared light (NIR).

In the case of fluorescence sensors the particle emits fluorescence light. In such a case the particle carries or comprises a fluorescence marker. According to an embodiment of the invention, the particle has a fluorescence chromophore group.

Where the sensor is a sensor of visible light (VIS), sensor of ultraviolet light (UV) or sensor of near infrared light (NIR), according to an embodiment of the invention, the particle has a chromophore group which is capable of absorbing light in a range of VIS, UV or NIR. In this case the sensor is preferably used in transmittance mode.

The sensor that emits a signal generated by the passing particle is connected with a processing unit (or computer). The signal processing unit records both the time (time-point) when the particle passes by and the duration of such event, as well as the number of particles travelling by. According to a preferable embodiment, the signal processing unit stores the flow-rate of the focused liquid afflux as a measured or input data, and in such way the unit is capable of calculating the particle size on the basis of the duration of time the particle's passage takes up. The processing unit may determine the flow rate by independent measures or may calculate it on the basis of the liquid driving effect (e.g., pressure or electroosmosis) and the known diameter of channel, optionally on the basis of a calibration recorded in the knowledge of the liquid driving effect.

The processing unit also records the number of particles passing per time units.

Based on the channel parameters and the above data, the processing unit is capable of calculating both the speed of the detected particle passing forward in the channel and the time when it reaches a certain point of the channel.

Preferably, the processing unit is connected with one or more control units regulating the processes detailed below:
- gas input,
furthermore, preferably one or more of the following:
- partial removal of the particles,
- digestion of particles,
- elimination of sample parts,
- processing samples and/or analytes contained in them,
- optionally, elimination of the gas or a part (excess) of the gas.

Highly preferably, the processing unit is also connected to a device performing analyte analysis. Therefore, the control of the system's upper-level processes can be adjusted to the time and duration of analyte measurements.

### Gas introduction Control

The control of gas induction can take place through the regulation of gas pressure and/or by valves. In a preferred embodiment, gas is inducted in the form of gas bubbles after the passage of each individual particle. In this case, feasibly, each particle represents an analyte and particles are analysed individually. Particles can be separated by gas introduction and their digestion can be performed in a way that their content should not become mixed.

In a further embodiment, the processing unit counts particles and after a specific number of particles passing by, it transfers a gas bubble to the liquid flow.

During gas introduction, attention should be paid to the fact that gas induction itself will change the flow rate of the liquid. If the aim is to mitigate this effect, an outlet can be installed for removing the excess liquid. Provided the system is maintained under constant pressure, flow rate fluctuation can be avoided by removing an amount of liquid whose volume is equal to that of the gas introduced. Alternatively, the exiting liquid may leave through a valve whose accurate setting may result in the avoidance of flow rate fluctuations. However, in case flow velocity is also measured, according to an embodiment of the invention, the fluctation in fluid flow rate induced by gas introduction does not present any problems, incidentally, such fluctuation may offer a further opportunity for the control of alignment by instrumental measurement.

According to a further embodiment of the invention, a buffer container is installed for the compensation of pressure fluctuation. Feasibly, the liquid is introduced into or discharged from the buffer container through a particle filter thus particles will not be "lost".

All such control mechanisms allow for the separation of particles, or groups of particles in a regulated manner, thus analytes can be determined, then aggregately digested and prepared for measuring.

With certain measurement procedures, gas bubbles remaining in the system between analytes do not cause any difficulties. Typically, these are procedures where tests are performed independently of the apparatus according to the invention ("off-line"). In this situation samples are collected and stored.

However, in a number of cases, where the test is performed by and operably connected to the apparatus according to the invention, the presence of gas bubbles will not pose any problems or might even be deemed beneficial. Mass spectrometry methods combined with different "soft ionization" techniques at atmospheric pressures can be listed among the aforementioned measurement procedures. The most widely used techniques for the ionization of various liquid samples promote the evaporation of sample molecules by application of a large amount of nebulizing gas, in which case the volume of the gas in the sample is negligible compared to that of the nebulizing gas. According to a preferred embodiment, for the ionization of the compounds originating from cells or proteins, electrospray ionization (ESI) technique is applied, which tolerates gas bubbles contained in the sample. Additionally, APCI (atmospheric pressure chemical ionization) and APPI (atmospheric pressure photoionization) techniques may also meet the given criteria.

In case the samples are introduced either into Eppendorf tubes or the wells of a microtiter tray, it is preferable that, also at the very end of the analysis, such samples are separated by gas bubbles.

As a matter of course, the detector's gas tolerance does not constitute the only possible alternative. According to a further embodiment, analyte processing can occur under conditions which necessitate the elimination of gas bubbles also in the event of mass spectrometric detection, an example for which is represented by chromatographic processing taking place prior to MS analysis.

### Controlling other processes

### Partial removal of particles

The apparatus of the invention can be used for the partial removal of particles. The removal can occur by a known method, e.g. removal of particles by using laser, as in the FACS device. The apparatus of the invention can be combined with such a device. According to an embodiment of the invention, furthermore, particles can be removed by a technique linked to the counter. For example, all predetermined number, e.g. every 2nd, 3rd, 4th, etc., of particles can be removed.

The elimination of particles can take place also through gas introduction, i.e. opposite or almost opposite the gas supply opening a 19' outlet can be found for the purpose of the particles' elimination, and in the event of the introduction of gas bubbles, the particle is removed from the focused liquid stream.

### Particle digestion

Particles can be digested by using any known method provided they are adaptable to the apparatus of the invention. Feasibly, the digestion device is combined with the apparatus of the invention.

Preferably, subsequent (downwards) to the introduction of gas, digestion is performed by using ultra-sound or laser methods. In this case the benefits of the method according to the present invention become clearly apparent since the content of the digested particles, preferable, that of cells, does not mix with the content of other particles and the original medium persists. Provided a later analytical or measuring method does not require the digestion of particles, however, this procedure might as well be omitted.

### Removing sample parts

In case a digestion process has been performed, the first step of the processing procedure is to eliminate from the digested particles the substance which delays or interferes the measuring process.

This presents difficulties primarily in relation to cells.

After cell digestion, cellular debris can be removed by applying different principles, such as on the basis of hydrophobicity, hydrophobic precolumn/guardcolumn or by the use of a filter.

By the addition of precipitating agents (such as a small amount of detergent, or by increasing the ionic strength) precipitation can be achieved, and the precipitates can be filtered out with the aid of a filter.

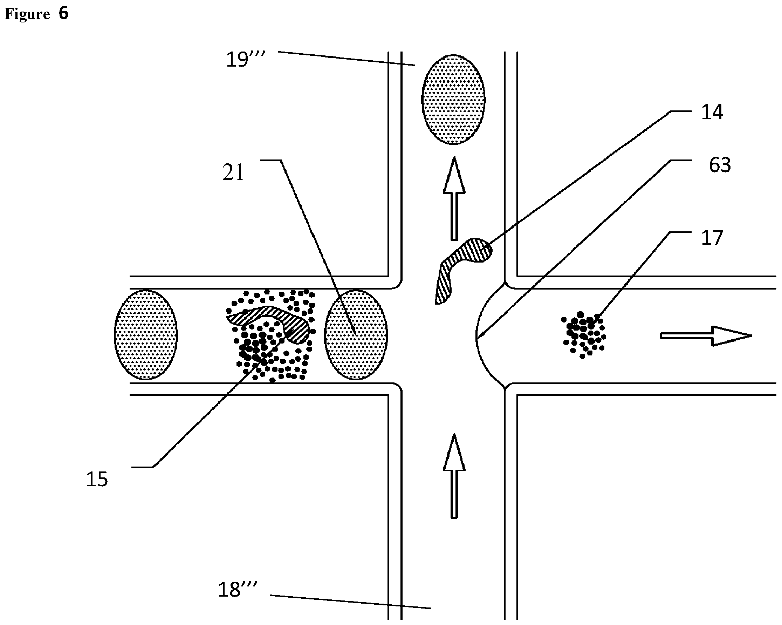

Cell debris can be separated also on the basis of differences in flow properties, such as using crosswise flow (Figure 6), or by virtue of size differences (e.g., by using membranes or membrane sets).

The methods which are used for the elimination of debris produced after the digestion of particles bordered by membranes of viral or biological origin or by structures composed of similar lipids are very much like the techniques applied with cells, such as mitochondria, vesicles thilacoid membranes, red blood cells and red blood cell ghosts, etc.

However, an adequate separation method also allows for the separation of such cell constructs provided these are the ones to be analysed. In this case, a continuous operation centrifuge or a batch-operated centrifuge may be integrated and the control of batch cycles can be coordinated directly by the inert gas introduced.

When other particles, e.g. particles of environmental origin, dust, fine granules, etc. are analysed, if digestion is necessary, the density of the debris generally differ significantly from that of the liquid, thus separation is preferably performed on the basis of flow property or density difference but separation by size is also deemed applicable.

Characteristically, according to the invention, it is the soluble fraction of the particle that is analyzed.

### Processing of the analytes

This step may as well be called as sample preparation, however, at this point the concept of sample is to be interpreted from the aspects of measurement and analysis, therefore, from the point of view of the present invention, analyte processing is more preferred.

This step is clearly determined by the requirements of the measuring method applied.

There is a method allowing for the analysis of the whole soluble fraction, in which case after the removal of debris, no further processing becomes necessary.

Such methods are the methods based on specific binding where a probe is used which binds specifically to a molecule to be measured in the analyte and other molecules do not interfere with such binding. Examples for the above methods are represented by immunological methods or PCRA-based methods.

Also, no further purification is necessary in procedures where the actual goal is to analyse the total soluble fraction of the cell or that of the particle. Examples for such procedures are represented by expression or proteomic methods.

In other cases the analyte should be further purified. This can be feasibly carried out with liquid chromatography columns, even with microcolumns inserted behind the output opening and before the analyzer.

The chromatography procedure can be any common chromatography, such as size exclusion chromatography (gel filtration), hydrophobic chromatography, ion exchange chromatography, affinity chromatography, etc. Feasibly, a chromatography column is a modularly changeable micropreparative column. In this case, the chromatographic column is formed in a way that its inlet can be connected to the outlet opening of the channel so that it can be removed and re-coupled, furthermore, the outlet of such column can be attached either to the analyzer or any other device suitable for collecting samples or to any device including a specially designed outlet or it can be connected to any other chromatography columns. It should be taken into consideration that under constant pressure, the chromatography step functions under the conditions of the pressure prevailing in the channel and such pressure can be adjusted by the pressure driving the hydrodynamically focused liquid as well as by the inert gas. This allows for conditions to be created which are similar to at least those of low- and medium pressure chromatographies (e.g., for FPLC, "Fast Protein Liquid Chromatography", etc.).

In a microfluidical embodiment, provided the channel is formed in a microfluidic device, the chromatographic column can be set up in the same or in another coupling microfluidic device. The latter design allows for the modular replacement of chromatographic processing.

In case of necessity, two-dimensional separation (LC x LC) of intact proteins can be performed on two subsequent column of different polarity. Such two-dimensional (feasibly automatized) liquid chromatographic method comprises an ion exchange column as first dimension and a reverse phase fast column as the second dimension. To carry out this procedure, a reasonably fast mass spectrometer (e.g., TOF), a second pump and a modulator capable of performing two-dimensional separation are necessary. The method can also be performed with microfluidic devices, thus it can be connected to the apparatus according to the invention. The apparatus according to the invention ensures the coordinated operation of the detector, modulator and the cell separator. Software suitable for the performance of the above operation is the Lab VIEW ("Laboratory Virtual Instrumentation Engineering Workbench" National Instruments, Austin, Texas, USA).

In the solution according to the invention this can be implemented by microfluidic device.

To perform the task, electrophoretic separation techniques that can be performed on chips, i.e. isoelectric focusing or capillary electrochromatography, are also provided.

According to a preferable embodiment, prior to the analysis, proteins are subjected to enzymatic digestion. Microfluidic devices, in other words the so called bioreactors are sutiable for performing on-line digestion (Anal Chem. 2001 Jun 1;73(11):2648-55. Integrated microfluidic system enabling protein digestion, peptide separation, and protein identification. Gao J, Xu J, Locascio LE, Lee CS.) The chips technique allows for the modular replacement of devices related to the digestion process.

In chromatographic methods, with special regard to the case of studying biological macromolecules (proteins, nucleic acids), for the purpose of appropriate efficiency, it may be necessary to remove bubbles from the system since, as a rule, the columns do not tolerate drying or at the very least their steady-state status would be lost. However, in other cases, such as when studying small molecules, columns in which drying off does not present any problems (see e.g. flash chromatography), the removal of inert gas bubbles is not necessary.

Methods listed as those providing the possibility for appropriate sample processing are well-known for persons skilled in the art, however, by synchronizing the different steps, the apparatus according to the invention is capable of preserving the advantages arising from cell separation during the whole procedure.

### Measurement methods

Since compounds injected by the apparatus according to the invention into the mass spectrometer are the same as sample compounds prepared with other methods, therefore, when selecting the type of mass spectrometer, only regular boundary conditions (e.g., resolution of the analyzator - orbitrap, FT-ICR-MS; quantitative analysis - QQQ, acquisition rate, mass range - TOF) must be considered since no new limiting factor arises in the application of the interface according to the invention.

### Coordination of Control Processes

In a preferable embodiment of the inventional method human intervention is not required for the operation, i.e. the apparatus comprises controlling units for performing the processes involved where the controlling units can be regulated through processing units having synchronized or timed operation. In the following section examples are demonstrated for the connection and control coordination of the operation of devices constituting parts of the inventional apparatus or of those linked to the devices forming the components of the apparatus. The apparatus can be constructed from units (constructed modularly) and in this case it is the control of the individual units (modules) that is to be coordinated. As a rule, the issue of the control of the specific apparatus units (pumps, detectors, inlet and outlet valves, lysator, such as cell lysator, degasser, etc.), or smaller or larger units (modules, 60 sample preparation units, 61 analytical units, 75 ion sources, 101 flow cytometers, 102 sorters, 105 interfaces, 110 mass spectrometers, or components applicable as modules, e.g. pump, detector or lysator, such as cell lysator) is known to have been resolved in the state of the art and the alignment of such units through softwares can be implemented by a person skilled in the art. Software suitable for such purpose is the Lab VIEW ("Laboratory Virtual Instrumentation Engineering Workbench" National Instruments, Austin, Texas, USA).

Typically, the information obtained by devices or device components ("detectors" ) applicable for collecting information, optionally in a processed form, provides signals to the components or tools ("effectors") operating the apparatus. Several effector components, however, can provide signals which may operate further components. For example, a signal by the particle counter detector participates in the control of the injector for sample loading and in the operation of gas input and the operation of gas inlet opening may have a role in the operation of downstream devices (such as sample preparation devices).

According to an embodiment of the invention, the apparatus comprises: a device for regulating the flow rate or pressure of the focusing liquid flow (pump 1), a device for introducing the samples 10 into the focusing liquid flow (injector 1), a device for particle counting (detector 1, such as ion source 40 and sensor 43), a device for gas introduction (valve 1 on gas inlet opening 31), optionally a device for removing particles or excess liquid (valve 2, such as through the 19' output opening), optionally a device for lysation (lysator 45, e.g. laser or ultrasonic cell lysator), optionally a device for removing particle compartments or bubbles (valve 3, e.g. through the opening 51 of degasser 53), optionally a device for liquid flow modulation (modulator 1, pump 2), optionally a device for further sample processing (LC1 and LC2, e.g. in units 60-63), a device for analyte detection (detector 2, such as mass spectrometer 110) and optionally, a device for moving the outlet opening and the sample holder (stepper-motor).

For the purpose of coordination, the following input and output signals should be received from or sent to each processing units by the individual control units.
- "ready" signal: the parameters correspond to the values set, and the time set for equilibrium has already elapsed (e.g., pressure of pump 1, temperature of detector 2),
- "not ready" signal: the parameters do not correspond to the values set, or the time set for equilibrium has not elapsed,
- "start" signal: when all units indicate a ready state to the processing unit (e.g., computer), it locks access to the individual control units and injector 1 launches the predefined injecting cycle,
- "stop" signal: the computer releases the block of access to the control units, the control units take the values set (meanwhile "not ready" status),
- "injected" signal: the time of injecting is the 0 time point of the measuring cycle, each control unit starts up in compliance with the predefined program sequence,
- "run" signal: the measuring cycle is in progress.

Additionally, input or output signals different from the above ones must be forwarded to or received from the processing unit by the individual control units. Detector 1 is a continuous signal source (out) and the fact that a signal significantly differing from the signal in baseline state appears in the register means the entrance of a particle in the detected area. Based on the signal data (amplitude, width at half height, etc.) the processing unit determines the size of the given particle in the function of the linear flow rate and records the time of detection. The signal incoming to the processing unit (with sufficient delay) from the channel of detector 1, optionally, is a start signal for gas input valve 1 and for detector 2. In a further preferred variation, the processing unit emits a start signal after receiving a definite number of signals from detector 1. The delay is determined by the processing unit on the basis of the flow rate ascertained by calibration (pump pressure vs. flow rate) and the relative distance between different devices. The valves and modulators have two different positions, i.e. open and closed, in other words the collecting and injecting positions. In the process the baseline state is the closed position of the valve and the collecting position of the modulator. On receiving a start signal the valve turns into an open position and the modulator into injecting position. The period of time that elapses between the emission of the start signal and that of the "close" signal is longer than or basically the same as the time period necessary for the performance of downwards processes involved, e.g. during the equilibration time period elapsed between the measurements by online detector 2 no new particle may enter the detector since the related data gets lost, i.e. the air bubbles should separate the particles at a given speed before the equilibration time of detector2. On receiving the start signal, valve 1 and valve2 simultaneously open and an amount of liquid equal to the amount of air bubbles injected will leave. Synchronization of the material flow entering through valve 1 and leaving through valve 2 is performed by the flow regulators attached to the valves.

The electronic processor unit is feasibly an electronic module based on a reduced instruction set computing (RISC) processor having a response time less than 100 µsec. This should be capable of carrying out regulation and control tasks by digital and analogue input and output. The resolution of digital-analog converter (DAC converter) is at least 12 bits.

### Examples

### Hydrodynamic focusing and gas introduction through symmetric focusing

Laminar fluid flow is bordered by 2 focusing liquid streams (side streams) in a way that their flow rates are different. The liquid flow to be focused is introduced between two 2 side streams at a rate different from that of the other two. The flow rates of the two 2 focusing liquid flow are equal, thus the 3 focused liquid stream is situated in the symmetry plane of liquid 1 (Figure 2).

### Hydrodynamic focusing and gas introduction through asymmetric focusing

When the arrangement is asymmetric or the flow rates of the two focusing liquid streams are different, the focused liquid flow shifts from the symmetry plane and becomes asymmetrically arranged (Figure 3). The channel wall is constructed in a way channel inlet opening 30 is placed in the way of focused liquid flow 3. After focusing liquid flows 2 have been removed, gas inlet opening 31 can be constructed in the channel wall and subsequently the inert gas is introduced into focused liquid flow 3. Then gas bubbles 21 separate cells 13 passing through the focused liquid flow. This technique can be used also for other particles.

Operation of the channel (interface) according to the invention and the way to connect it to a flow cytometer.

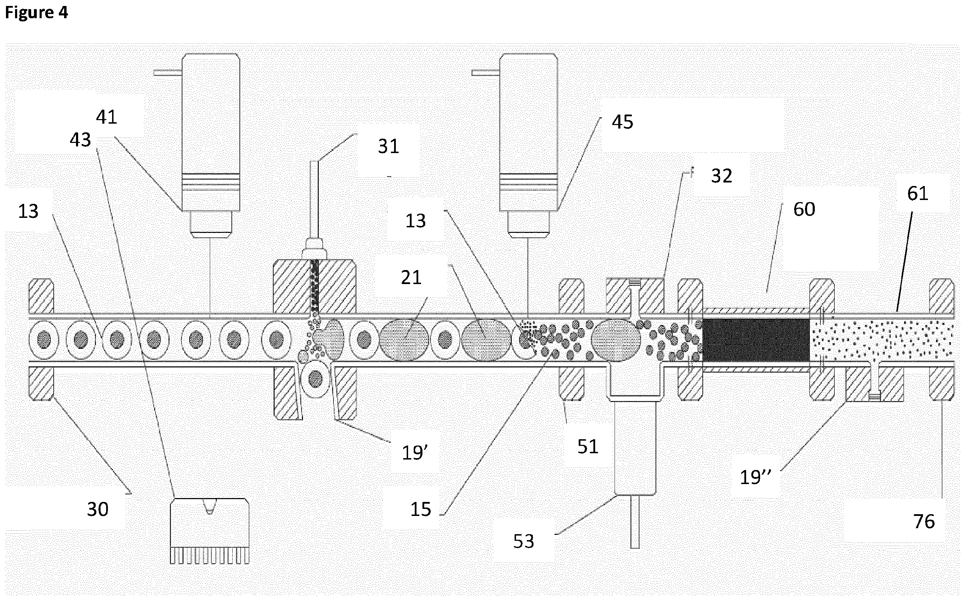

By being connected to a flow cytometer, optionally through sorter (FACS), between hydrodynamically focused cells 13 entering the channel through the inlet opening of channel 30, through gas inlet opening 31 inert gas bubbles (nitrogen, inert gases: argon, helium, etc.) are stratified in way that the cells and the low-volume liquid surrounding the cells are each separated by a gas bubble 21. Such sequential feeding is carried out with the aid of a laser- or optical scanning system as well as by a gas-feeding system. Consequently, the specific 13 cells and their components travel separated from each other in a low-volume liquid and reach the ion source of the mass spectrometer through some other parts of the interface (Figure 4).

In examples shown schematically in Figure 4, along the total length of the interface, inlets 18 and outlets 19 openings of different functions are located at well defined points. Outlet opening 19' functions as a means for removing cells from the system, which are not intended to examined. Through outlet opening 19" e.g. the unwanted part of cell lysates can be removed. Should analytical demands make it necessary, optionally, the flow rate can also be reduced through these or other openings. Surplus gas bubbles are also removed through another similar opening by using degasser 53 before they reach sample preparation unit 60 and/or analytical unit 61.

Optionally, degasser 53 is also suitable for removing cell debris (see Figure 6). According to a variation, cell debris can also be removed with a separate device.

Samples are prepared in sample preparation unit 60 and - optionally - the analytical separation is also carried out here.

In analytical unit 61, samples are converted to a form compatible with the analysator, such as the addition and removal of materials necessary for the analysis, e.g. splitting or the addition of derivatizing materials.

When removal openings are in operation, a valve system is activated which communicates with the laser scanning system comprising laser source 41 and sensor 43, thus the user will be informed about when and which cells and/or cell lysates are to be removed. Solutions, liquids, reagents required for the analytical units can be introduced into the system through inlet openings.

Separated individual cells can be disrupted (lysated) by the application of different irradiation methods, lysation can be performed by the use of lysator 45 (Figure 4), such as a laser-induced cell lysator or ultrasonic cell lysator (feasibly, high energy ultrasonic) or e.g. with UV, IR, where the type of lysator is determined by the purpose of the application. Cell lysate 15, e.g., reaches sample preparation unit 60 through gate 51, optionally, prior to the inert gas being removed through degasser 53. Optionally, the desired amount of liquid can be supplied through liquid inlet opening 32, thus, it can be ensured that analytes are not mixed and their distance do not change in the liquid flow, e.g. the distance is controlled. Various sample preparation steps - such as solid phase extraction, size exclusion fractionation, enzymatic digestion - can be performed by the use of further component units of the interface (such as sample preparation unit 60). Component units having different functions can be varied or replaced according to users' demand.

### Separation of a cell lysate by cross flow through a frit

A cell lysate, such as non-lysed compartments or membrane fraction, etc. of the cells can be separated on the basis of differences in flow characteristics, such as by cross flow, e.g. according to the embodiment shown in Figure 6. According to this embodiment, cell lysate 15 moves between two gas bubbles 21 in the focused liquid flow then its soluble fraction 17 passes through frit 63, while cell debris 14 is removed through an outlet opening 19‴ operated by the liquid flow entering through inlet opening 18‴. The control of this process is feasibly synchronized with gas introduction.

### Coupling flow cytometry and mass spectrometry detection

By using the specially implemented coupling technique, the qualitative and quantitative investigation of focused individual cells or cell populations having different features and types can be carried out directly by mass spectrometry.

In this case unlimited number of parameters can be studied. Mass spectrometry detection does not require any labeling or chemical modification (label-free), however, in the process of investigation, different labeling or quantitative techniques based on internal calibration can also be applied. With the aid of mass spectrometry linked directly to flow cytometry all parameters can be determined from both individual cells and cell populations and such parameters can be studied by current mass spectrometry and tandem mass spectrometry systems. Consequently, the method is suitable for the identification of the structures, sequences, chemical modifications, concentrations, local distributions and interactions of small- and macromolecules.

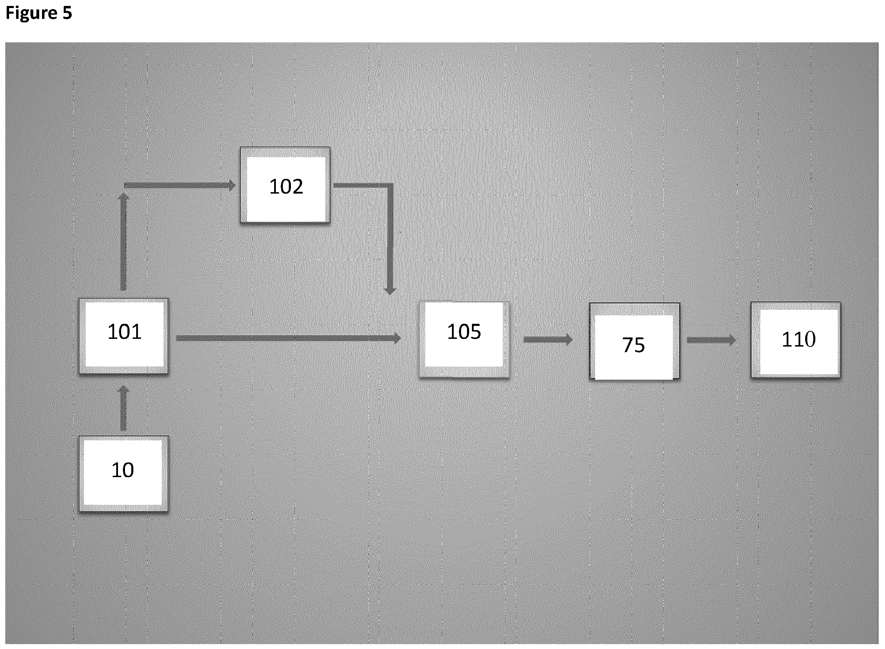

According the scheme shown in Figure 5, sample 10 is analyzed by the use of the "FC-MS" device according to the invention. The hydrodynamically focused liquid flow in flow cytometer 101 can be introduced directly into interface 105 of the invention where gas bubbles are layered between particles, usually cells, or between a specific number of their groups. However, the particles can be introduced also into sorter 102 where they can be sorted on the basis of a certain parameter and the thus resulted subset is introduced - in a hydrodynamically focused liquid flow - into interface 105. The individual analytes are separated in interface 105 and (in the present example, through a sample preparation module constituting a part of interface 105) they are introduced on-line into ion source 75 and subsequent to ionization, into mass spectrometer 110 for analysis.

### Coupling flow cytometry, two-dimensional comprehensive liquid chromatography separation and mass spectrometry detection

In the FC-LCxLC-MS complex device, between the flow cytometer channel and the first chromatographic column or between the first and second columns a ten-port rotating valve equipped with two small-size loops fulfills the role of the modulator. Adjustments of the measuring parameters are initiated from the detector and continue with the optimization of the preceding units. At the adjustment of the detector, it should be borne in mind that in the mass range of the target compound the detector should be capable of acquiring up to twenty data points per peak. Since in two-dimensional chromatography the flow rate in the second dimension is several times higher than the usual rate, therefore, in this technique almost exclusively TOF-MS is applied. A determining factor in this technique is represented by the run time of the second dimension of two dimensional liquid chromatography applied for the on-line replacement of two-dimensional gel electrophoresis. The fixed-volume loops of the second rotating valve must be filled during the analysis of the sample in the second column by choosing a flow rate on the first column, which ensures the least possible loss. Run time adjusted in the first column determines the size of a gas bubble to be introduced and the amount of solvent which partially replaces a gas bubble. Preferably, by using the gate shown in Figure 8, the gas bubble introduced is partially changed to the suitable solvent. In case the volume of loops and the flow rate in the cytometer channel are accurately known and the loop sizes are suitably small, gas bubbles can be eliminated from the system via the control of the rotating valve without material loss. When the first loop is in collecting position, the gas bubble and a part of the solvent are removed from the system and when the loop is filled with the cell or the desired amount of cells or cell constituents and the solution containing cell constituents after cell lysis, the actuator will turn the valve of the first loop into injection position. The system is held in this position for a period of time necessary for the complete separation of cells or their constituents and exactly this is the period of time taken by the gas bubble to leave and the other loop coupled with the valve becomes filled up with the cells or cell constituents to be separated. Through the injecting position of the first loop the pump that is directly connected with the valve maintains the desired flow in the column during this period.

A loop size which is suitably small and scaling proportionally with cell size may become feasible on a chip device. The input of gas bubbles separating cells or cell groups is regulated by the flow cytometer in the function of chromatography parameters, at a given flow rate, bubble removal corresponds to running time. Since the flow rate, the amount of gas and the internal volume are known, the actual position of gas bubbles in the channel can be calculated, therefore, the operation of the rotating valve (i.e. gas elimination) is synchronized with gas feeding. Through the demonstrated modulator arrangement it can be ensured that the gas bubble causing a problem in the given step is removed from the system and replaced with the suitable solvent in a way that a repeated mixing of cellular constituents cannot occur even if diffusion is present, and all this can be achieved without human intervention.

### Advantages of the invention and its industrial application

The object of the invention concerns the separation of samples or analytes to be analyzed in microchannels, such as microfluidic devices where the separation is carried out by the introduction of an inert gas.

According to a preferred embodiment, the inventional apparatus is essentially an adapter (interface) capable of investigating proteins, peptides, lipids, metabolites and other biomolecules qualitatively and quantitatively in a direct and label-free mode. The polarity and size range of molecules investigated are not limited and theoretically, the method can be used with or connected to any devices produced by any flow cytometer manufacturer. A preferred investigation method is represented by mass spectrometry and the apparatus according to the invention can be attached to a mass spectrometer. Accordingly, an FC can be coupled with an MS by using the adapter (interface) of the invention.

Thus, one of the great advantages of the invention is that the adapter (interface) of the invention can be connected to the already existing ion sources, mass spectrometers and flow cytometers. The interface is capable of establishing an on-line connection where, by the combination of the advantages and potentials of the already existing and the new techniques, a piece of new, complex and special equipment is created. This type of on-line connection of the flow cytometer to other different techniques, which refers to the separation of testable samples through gas introduction into the channel, cannot be implemented in its present form or with our present knowledge by any other technique different from the one presented above.

Compared with the current solutions, the advantages of the invention described in the present application are as follows: (none of the items listed herein can be realized by the application of any devices according to the prior art and known by the inventors).
- The invention is suitable for proteomic, peptidomic, lipidomic and metabolomic analyses of biomolecules, proteins, peptides, lipids, metabolites, etc., i.e. it is capable of determining structures, post-translational modifications and sequences.
- The method fully combines the advantages of the modern mass spectrometric and flow cytometric methods and their global applicability.
- Since biomolecules do not become atomized, thus, due to soft ionization techniques, they are ionized as molecules and retain physiologically important structural characteristics.
- The invention is a completely label-free technology, although it can be combined with the well-known labeling techniques (iTraQ, SILAC, ICAT, etc.).
- The technique can be fully automatized and does not require any special sample preparation procedures.
- Through the elimination of the labeling technique as well as the integration of already existing instrumentation, the operation of the set of devices can be performed cost-efficiently.
- The interface is suitable for full sample preparation from cells and cell populations as well as for the quantitative and qualitative analyses of their constituents in an unlimited number and type.
- The technique is applicable by the use of the already existing and reliable ion sources, flow cytometers and mass spectrometers without any special modifications made to them.
- Regarding proteins, peptides, lipids, metabolites, etc. constituting the individual cells, the invention is suitable for the so-called cell-by-cell imaging techniques.
- The invention is suitable, among others, for the proteomic, peptidomic, lipidomic and metabolomic analyses of a single cell.
- The invention is suitable for the identification of unknown compounds, including the identification of protein and peptide sequences.
- The invention is suitable for the comparative qualitative and quantitative investigation of different sample groups (e.g., patient, healthy control), and for expression proteomics.
- The individual interface components can optionally be varied as required by the specific technological phases.

With the aid of the present interface a significant part of routine proteomic, peptidomic, metabolomic and lipidomic analyses can be performed, furthermore, the interface allows for the development of tecnically applicable, special diagnostic procedures, i.e. whole blood mass spectrometry-based diagnostics and for single cell imaging, single cell proteomics, single cell peptidomics, single cell metabolomics and single cell lipidomics.

## Claims

1. An apparatus for separating hydrodynamically focused particles in a liquid, comprising
- a channel with wall for conveying particles focused hydrodynamically in a liquid stream, said channel comprising inlet and outlet openings and being equipped with a gas inlet opening for introducing inert gas bubbles between groups of hydrodynamically focused particles having predetermined particle number; and
- means for regulation of the introduction of inert gas into the channel.

2. The apparatus according to claim 1 further comprising means for counting the particles conveyed in the channel.

3. The apparatus according to any of claims 1 and 2 wherein
the means for regulation of the introduction of inert gas comprises a sensor for detecting each particle carried by the liquid stream, wherein the gas inlet opening is located downwards from the sensor in flow direction.

4. The apparatus according to claim 3 comprising a control unit connected to the sensor and regulating the inert gas introduction between two different group of particles, wherein any particle group(s) contains one or more particles.

5. The apparatus according to any of claims 1 to 4 wherein
- the inlet opening of the channel is connected to the device focusing the particles hydrodynamically, and/or
- the outlet opening of the channel is connected to an analyzer.

6. The apparatus according to claim 5 wherein the inlet opening of the channel is connected to the device focusing the particles hydrodynamically which is a flow cytometer or a cell sorter.

7. The apparatus according to any of claims 5 and 6 wherein the outlet opening of the channel is connected to an analyzer and the analyzer comprises a detection unit preferably selected from the group consisting of mass spectrometer, nucleic matrix, protein matrix, thermocycling device (PCR device).

8. The apparatus according to claim 7 wherein the detection unit is mass spectrometer.

9. The apparatus according to any of claims 1 to 8 comprising one or more selected from
- outlet opening for removing any excess particles,
- outlet opening for removing any excess inert gas,
- outlet opening for removing any excess liquid.

10. The apparatus according to any of claims 1 to 9 further comprising means for digesting particles thereby releasing analytes from the particles and optionally an outlet opening for removing the components of the digested particles different from analytes, wherein the particles are preferably selected from the group consisting of cells, cellular compartments, membrane vesicles, micelles, viruses and complexes of biomolecules.

11. The apparatus according to claim 10 wherein the means for digesting particles is lysis device.

12. A method for separating hydrodynamically focused particles in a channel comprising
- providing liquid stream carrying hydrodynamically focused particles in a channel,
- detecting the hydrodynamically focused particles,
- introducing inert gas (gas bubbles) into the flow channel between groups of particles, wherein predetermined number of one or more particles forms each of the groups.

13. The method according to claim 12 wherein the amount of the introduced inert gas is controlled.

14. The method according to any of claims 12 and 13 comprising one or more selected from
- removing the excess particles from the liquid stream,
- removing the excess inert gas,
- removing the excess liquid.

15. The method according to any of claims 12 to 14 wherein analyte is released from the particles preferably by digestion of the particles, more preferably by destruction or lysis.

16. The method according to claim 15 wherein the digested particles or the analyte are analysed.

17. The method according to any of claims 12 to 16 wherein the particles are selected from the group consisting of cells, cellular compartments, membrane vesicles, micelles, viruses and complexes of biomolecules.

18. The method according to any of claims 12 to 17 wherein
- the particles carried by the liquid stream is detected by a sensor,
- the particles are counted,
- the introduction of inert gas between two different groups of particles having predetermined number of particles is regulated.
